# DEMANDE DE BREVET EUROPEEN

(11) **EP 4 723 396 A1**
(43) Date de publication de la demande: **08.04.2026**
(21) Numéro de dépôt: 25204449.0
(22) Date de dépôt: 24.09.2025
(51) Int. Cl.: H01R 13/703, H01R 24/64, H04L 12/00, H04M 7/00

(54) **CONNECTEUR ÉLECTRIQUE FEMELLE POUR PASSERELLE DOMESTIQUE AVEC DÉTECTION DE L INSERTION D'UN CONNECTEUR ÉLECTRIQUE MÂLE**

(30) Priorité: 04.10.2024 FR 2410723
(71) Demandeur: SAGEMCOM BROADBAND SAS, 92700 Bois- Colombes (FR)
(72) Inventeur: NEGELE, Jean-Philippe, 92270 Bois-Colombes (FR)
(74) Mandataire: Regimbeau

(57) **Abrégé**

Ce document concerne un connecteur électrique femelle (10) pour appareil électrique comportant une interface de communication (20), comportant une pluralité d'éléments conducteurs (13₁, 13₂, 13₃...), un ensemble desdits éléments conducteurs, dits actifs, étant destinés à établir un contact avec des bornes d'un connecteur électrique mâle (30) en s'insérant dans des cavités, dans lequel au moins un autre élément conducteur (13₁, 13₆)
- est mobile entre une position de repos le mettant en contact avec un conducteur fixe (15), et une position active rompant ledit contact, et
- possède une largeur adaptée pour être amené en position active par un élément (35) du corps (31) du connecteur électrique mâle (30) lorsqu'il est inséré dans le connecteur électrique femelle (10).

## Description

### DOMAINE TECHNIQUE

La présente invention concerne la détection de la présence d'un connecteur électrique femelle dans un connecteur électrique mâle. Elle s'applique en particulier aux appareils électriques de télécommunication et à la détection de l'enfichage d'un connecteur dans un socle correspondant, notamment de type téléphonique.

L'appareil électrique peut par exemple être une passerelle domestique. Une passerelle domestique (en anglais, « *home gateway* ») est un dispositif réseau utilisé pour connecter les appareils domestiques (ordinateurs, téléviseurs connectés, etc.) à Internet et à d'autres réseaux. Elle joue le rôle d'intermédiaire entre le réseau domestique (généralement un réseau local ou LAN pour « *Local Area Network »* en anglais) et l'Internet (un réseau étendu ou WAN pour « *Wide Area Network* »). Elle peut trouver place au domicile d'un particulier ou dans un milieu industriel de sorte à connecter le réseau d'entreprise au réseau internet.

La passerelle domestique combine plusieurs fonctions essentielles pour gérer la connectivité et la sécurité du réseau domestique.

Ce type peut posséder un connecteur électrique femelle, ou port, permettant la connexion de périphériques optionnels, notamment appareils téléphoniques, des télécopieurs, etc., ainsi que les circuits, ou interfaces, associés.

Toutefois, il s'avère que ces appareils téléphoniques sont de moins en moins utilisés, dans la mesure où les utilisateurs optent généralement pour l'utilisation d'un terminal mobile de télécommunication. Dans de nombreux cas d'usage, aucun appareil n'est connecté sur ce connecteur électrique.

Or, le maintien en activité de l'interface de communication associée à ce port génère une consommation électrique substantielle. Celle-ci doit constamment restée active afin de gérer des communications, dans le sens entrant ou sortant, alors qu'aucun appareil n'est raccordé.

Une telle perte d'énergie est préjudiciable tant pour la consommation électrique du domicile, ou de l'entreprise, associée à la passerelle (et donc pour son budget) que pour l'empreinte écologique globale. Cette problématique est d'autant plus importante pour une entreprise pouvant disposer d'un parc d'équipements disposant de tels ports non-utilisés.

Ce type de situation peut apparaître également avec d'autres types d'appareils électriques pour lesquels une interface de communication consomme de l'énergie alors qu'aucun appareil n'y est raccordé.

Il existe donc un besoin pour détecter la présence ou non d'un appareil raccordé à un connecteur électrique femelle, ou port.

Une première approche consiste à envoyer des signaux via le connecteur électrique et d'étudier une réponse d'un éventuel appareil connecté. En fonction de cette réponse (ou de l'absence de réponse), la passerelle peut en déduire la présence ou non de l'appareil connecté.

Une telle approche nécessite toutefois un traitement logiciel exécuté par la passerelle : ce traitement génère lui-aussi une consommation électrique et, surtout, requiert que la passerelle soit dans un état lui permettant d'effectuer ce traitement logiciel. Autrement dit, la passerelle doit être maintenu dans un état actif, ou en tout cas dans un état de veille dans lequel le microprocesseur est actif.

Or, il est évidemment intéressant de basculer les passerelles dans des états de veille profonde lorsqu'il n'est pas utilisé : pendant la nuit ou le week-end pour une entreprise, pendant la journée en semaine pour un domicile de particulier, sur une durée planifiée par l'utilisateur (absence, vacances...), etc. Dans un tel état, le microprocesseur n'est pas à même d'effectuer le traitement logiciel décrit et donc de détecter la présence ou l'absence d'un appareil connecté ce port.

Une autre approche a été décrite dans le brevet EP3167514. Celui-ci décrit un mécanisme dans lequel l'insertion d'un connecteur électrique mâle (par exemple de type ADSL) est inséré dans un connecteur électrique femelle en testant l'ouverture d'un circuit électrique par le déplacement d'éléments conducteurs du connecteur femelle par les plots correspondants du connecteurs mâles.

Il a en effet été constaté que certains éléments, correspondant à des fils du câble reliant la passerelle à l'appareil connecté, n'étaient pas utilisés. En général, deux paires de fils sont simplement utilisés alors que, selon les types de connecteurs, 6 ou 8 éléments sont présents. Les éléments non-utilisés pour la transmission du signal peuvent alors être utilisés pour la détection de la présence du connecteur électrique mâle dans le connecteur électrique femelle.

Toutefois, afin de réduire les coûts de production et de transport, certains câbles du marché présentent des connecteurs électriques mâles sans bornes associés aux éléments conducteurs non-utilisés pour la transmission du signal. Du coup, les éléments conducteurs non-utilisés ne peuvent plus être déplacés par des bornes du connecteur électrique mâle lors de son insertion dans le connecteur électrique femelle. Le mécanisme proposé par le brevet EP 3 167 514 n'est alors plus à même de détecter l'insertion, et donc la présence, du connecteur électrique mâle.

En conséquence, lors de la connexion d'un appareil de type téléphone à une passerelle fonctionnant selon ce principe, cette connexion ne sera pas détectée et l'interface de communication associée restera en veille, ne permettant pas à l'appareil téléphonique d'être fonctionnel.

Il existe donc un besoin d'améliorer les propositions actuelles de l'état de la technique.

### EXPOSÉ DE L'INVENTION

Un but de la présente description vise ainsi notamment à fournir un procédé et un connecteur électrique femelle, pour un appareil électrique tel qu'une passerelle domestique, permettant la détection de la présence ou non d'un connecteur électrique mâle insérée dans le connecteur femelle. Cette détection peut permettre de gérer la mise en veille d'une interface de communication de cet appareil, associée au connecteur femelle.

Selon un premier aspect, un objet de la description peut être mise en œuvre par un connecteur électrique femelle pour appareil électrique comportant une interface de communication reliée audit connecteur électrique femelle, le connecteur électrique femelle comportant une pluralité d'éléments conducteurs, un ensemble desdits éléments conducteurs, dits actifs, étant destinés à établir un contact avec des bornes d'un connecteur électrique mâle en s'insérant dans des cavités adaptées dudit connecteur électrique mâle, dans lequel au moins un autre élément conducteur :
- est mobile entre une position de repos le mettant en contact avec un conducteur fixe de sorte à fermer un circuit électrique, et une position active rompant ledit contact, et,
- possède une largeur adaptée pour être amené en position active par un élément du corps dudit connecteur électrique mâle lorsque ledit connecteur électrique mâle est inséré dans le connecteur électrique femelle

Suivant des modes de réalisation préférés, un objet comprend une ou plusieurs des caractéristiques suivantes qui peuvent être utilisées séparément ou en combinaison partielle entre elles ou en combinaison totale entre elles :
- chaque élément conducteur actif est prolongé par au moins une patte destinée à traverser le corps dudit connecteur électrique femelle pour solidariser ledit élément conducteur audit corps, dans lequel ledit au moins un autre élément conducteur est prolongé par deux pattes dont l'écartement correspondant à l'écartement entre deux pattes prolongeant des éléments conducteurs actif.
- le connecteur électrique femelle comporte un circuit de détection pour mettre en veille et/ou réveiller ladite interface de communication lorsque ledit circuit électrique est fermé.
- ledit au moins un autre élément conducteur est situé immédiatement avant et/ou après lesdits éléments conducteurs actifs
- ladite interface de communication est une interface téléphonique d'une passerelle résidentielle

Un autre aspect concerne un appareil électrique comportant au moins un connecteur électrique femelle tel que précédemment décrit. Cet appareil électrique peut par exemple être une passerelle domestique.

Un autre aspect concerne un procédé de détection de la présence d'un connecteur électrique mâle inséré dans un connecteur électrique femelle d'un appareil électrique, ledit connecteur électrique femelle comportant une pluralité d'éléments conducteurs, dans lequel une insertion dudit connecteur mâle entraîne :
- une mise en contact d'un ensemble desdits éléments conducteurs, dits actifs avec des bornes dudit connecteur électrique mâle en s'insérant dans des cavités adaptées dudit connecteur électrique mâle, et,
- un déplacement d'au moins un autre élément conducteur depuis une position de repos le mettant en contact avec un conducteur fixe de sorte à fermer un circuit électrique, vers une position active rompant ledit contact, par l'action d'un élément du corps dudit connecteur électrique mâle, et,
- une détection de la présence dudit connecteur électrique mâle par la détection de l'ouverture dudit circuit électrique.

D'autres caractéristiques et avantages apparaîtront à la lecture de la description qui suit d'un ou plusieurs modes de réalisation préférés, donnée à titre d'exemple et en référence aux dessins annexés

### BRÈVE DESCRIPTION DES DESSINS

Les dessins annexés illustrent des exemples de l'invention :
- Les figure 1 illustre schématiquement une architecture fonctionnelle dans laquelle peut s'inscrire un procédé et un connecteur électrique femelle selon un ou plusieurs modes de réalisation.
- La figure 2 illustre un connecteur électrique femelle selon un mode de réalisation.
- Les figures 3a et 3b illustrent deux exemples de connecteurs électriques mâles.
- La figure 4 illustre le déplacement des éléments conducteurs de détection lors de l'insertion d'un connecteur électrique mâle, selon un ou plusieurs modes de réalisation.
- La figure 5 illustre deux exemples d'éléments conducteurs actifs selon des modes de réalisation.

### EXPOSÉ DÉTAILLÉ DE MODES DE RÉALISATION PARTICULIERS

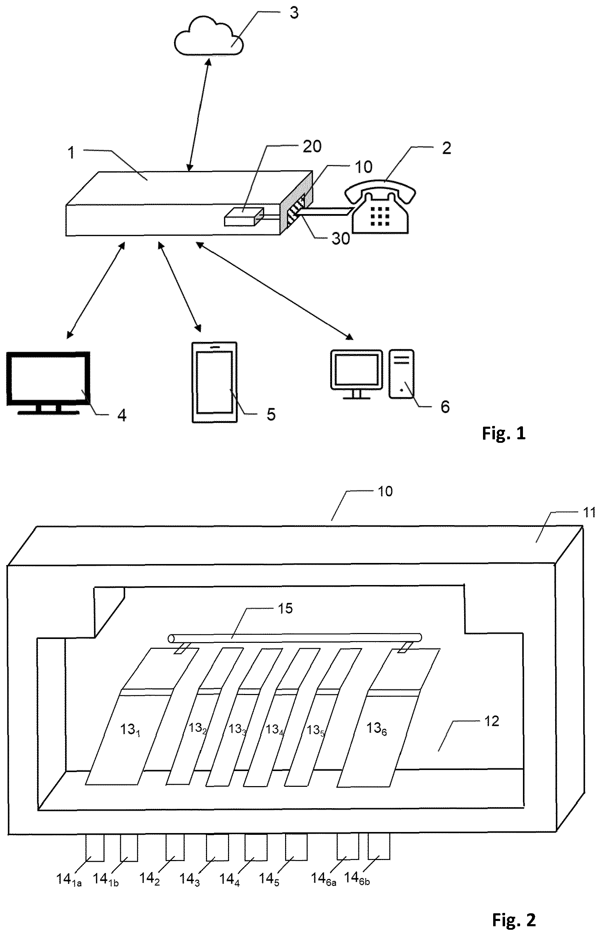

Le connecteur électrique femelle proposé peut être utilisée pour une passerelle domestique ainsi qu'illustré en **figure 1****.**

La passerelle domestique permet la connectivité entre des équipements 4, 5, 6, connectés à un réseau local, LAN (pour « *Local Area Network »* en anglais) entre eux et avec un réseau de type Internet 3. Les équipements connectés au réseau local peuvent être de différentes natures : ordinateurs (portables ou fixes), téléphones mobiles (par exemple de *type « smartphone* »), tablettes numériques, télévisions connectées, objets connectés (loT pour « *Internet of Things* »), etc.

La passerelle (ou plus généralement, l'appareil électrique) 1 comporte différentes interfaces de communication associées à différentes technologies de connectivités : fibre optique vers Internet, Ethernet^{™}, Wi-Fi vers le réseau local, etc.

La passerelle 1 comporte également une interface de communication 20 associée à un connecteur électrique femelle (ou embase) 10 permettant la connexion physique et logique d'un appareil externe 2 tel qu'un téléphone, grâce à un câble. Ce câble comporte un connecteur électrique mâle 30 destiné à être inséré dans le connecteur électrique femelle 10 de la passerelle 1. Cette interface est généralement appelée FXS pour « *Foreign eXchange Subscriber »* en anglais.

La **figure 2** schématise un tel connecteur électrique femelle 10, selon un mode de réalisation.

Il se compose d'un corps, ou boitier, entourant une cavité 12 dans laquelle sont localisés une pluralité d'éléments conducteurs, 13₁, 13₂, 13₃, 13₄, 13₅, 13₆.

Dans cet exemple 6 éléments conducteurs sont représentés. Le nombre peut toutefois varier selon le type de connecteurs. Par exemple, les connecteurs RJ1x (pour « Registered Jack » en anglais) comportent 6 éléments conducteurs, les connecteurs RJ45 et RJ48 comportent 8 éléments conducteurs...

La cavité 12 est destinée à recevoir un connecteur électrique mâle 30, ou fiche. En particulier, elle possède un profil qui correspond à celui du connecteur mâle. En bout de course, un dispositif (non représenté sur les figures) permet de bloquer et maintenir le connecteur mâle en position. Une action particulière est alors nécessaire pour retirer le connecteur mâle qui ne peut normalement pas se déconnecter de façon accidentelle.

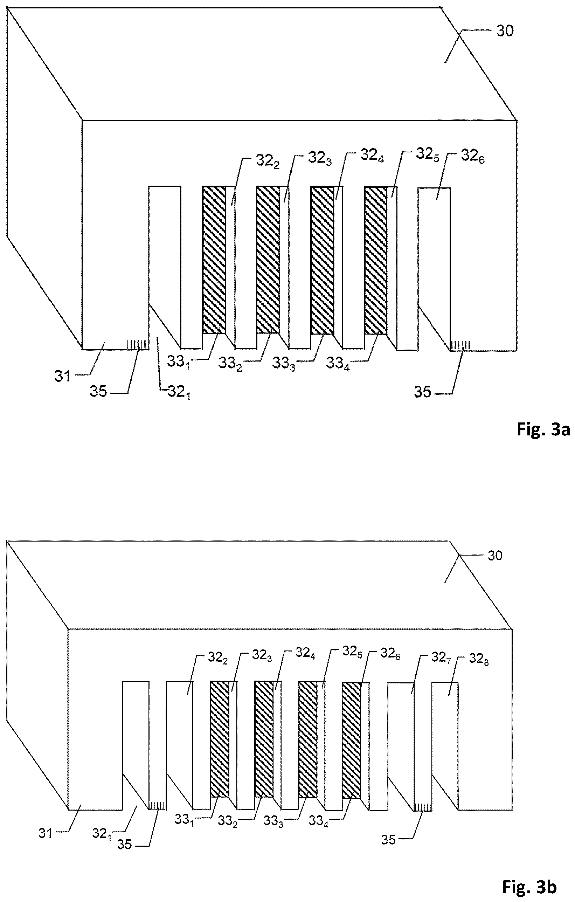

Les **figures 3a et 3b** illustrent deux modes de réalisation de connecteurs électriques mâles avec 6 bornes (figure 3a) ou 8 bornes (figure 3b).

Le connecteur mâle 30 adapté à l'embase 10 peut s'insérer dans la cavité 12, ce qui provoque la mise en contact de certains éléments conducteurs 13₁, 13₂, 13₃, 13₄..., avec des bornes conductrices 33₁, 33₂, 33₃ des connecteurs mâles.

Plus précisément, lors de l'insertion, les éléments conducteurs de l'embase sont en face des cavités 32₁, 32₂, 32₃... du connecteur mâle dans lesquels peuvent se trouver ces bornes conductrices. Au moins lorsque le connecteur électrique mâle 30 est en bout de course les bornes sont en contact avec les éléments conducteurs de l'embase (ou connecteur électrique femelle) 10.

Il peut être prévu que les éléments conducteurs de l'embase sont positionnés dans un même plan, et sont perpendiculaires à la surface de contact du connecteur électrique femelle. Autrement dit, ils sont dans l'alignement des cavités, de sorte que leur insertion soit possible.

Ces éléments conducteurs peuvent être des lamelles en métal, par exemple. Elles peuvent être souples, flexibles et/ou montés de façon mobile afin de pouvoir se déplacer entre deux positions extrêmes. Ce déplacement permet d'assurer une bonne mise en contact avec les bornes du connecteur mâle.

Ces éléments conducteurs peuvent être maintenus en place, ou solidarisés au moyen de pattes 14₁ₐ, 14_{1b}, 14₂, 14₃, 14₄, 14₅, 14₆ₐ, 14_{6b} qui sont insérées dans le corps (partie inférieure sur la figure 2) de l'embase et la traversent. Elles peuvent être également soudées au circuit imprimé positionné sur le corps de l'embase.

Classiquement, uniquement une partie des éléments conducteurs sont utilisés pour la transmission du signal. En général, cet ensemble d'éléments conducteurs utilisés, appelés « actifs », se situent au centre du connecteur.

Dans l'exemple de la figure 2, ces éléments conducteurs actifs correspondent aux éléments conducteurs centraux 13₂, 13₃,13₄, 13₅.

Ces éléments conducteurs actifs sont destinés à entrer en contact, chacun, avec une borne associée du connecteur mâle lorsque celui-ci est insérée dans l'embase 10.

Les pattes 14₂, 14₃, 14₄, 14₅ de ces éléments conducteurs actifs permettent le contact électrique entre ceux-ci et l'interface de communication 20 associée à l'embase 10. Ainsi, lorsque le connecteur mâle est inséré, il y a établissement d'une continuité de conducteurs entre l'interface de communication et le câble correspondant au connecteur mâle.

Par ailleurs, au moins un autre élément conducteur 13₁, 13₆, dit(s) « de détection », est prévu pour la détection de la présence d'un connecteur électrique mâle 30 inséré dans le connecteur électrique femelle 10. Ce au moins un autre élément conducteur est distinct de l'ensemble des éléments conducteurs actifs : comme ils ne sont pas utilisés pour la transmission de signaux, ils peuvent être utilisés pour la détection de présence du connecteur mâle.

Selon un mode de réalisation, ces autres éléments conducteurs 13₁, 13₆ sont situés aux extrémités de l'embase 10 dans la mesure où les éléments conducteurs actifs sont situés au centre de l'embase : ils se situent donc immédiatement avant et/ou après les éléments conducteurs actifs.

Le ou les éléments conducteurs 13₁, 13₆ de détection (c'est-à-dire utilisés pour la détection de présence) sont mobiles entre une position de repos le mettant en contact avec un conducteur fixe 15, de sorte à fermer un circuit électrique, et une position active rompant ce contact.

Préférentiellement, ces éléments conducteurs de détection possèdent une caractéristique d'élasticité prévue pour les rappeler en position de repos en l'absence (et lors du retrait) d'un connecteur mâle.

En outre, le ou les éléments conducteurs 13₁, 13₆ de détection possèdent une largeur adaptée pour être amenés en position active par un élément 35 du corps du connecteur électrique mâle 30 lorsque celui-ci est inséré dans le connecteur électrique femelle 10.

Comme illustré sur la figure 2, la largeur de ces éléments conducteurs de détection est plus importante que celle des éléments conducteurs actifs. Cette largeur peut correspondre à la distance entre les bords opposés de deux éléments conducteurs actifs successifs.

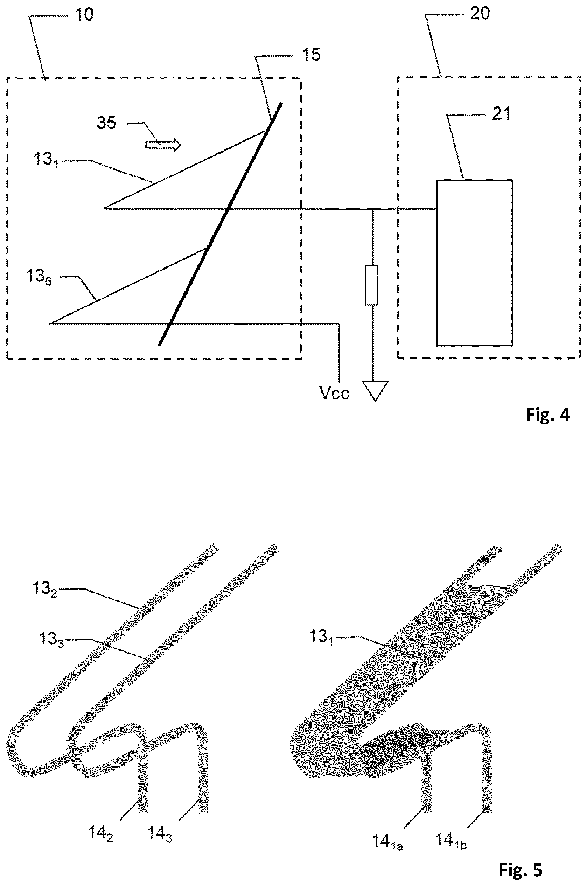

La **figure 5** illustre deux exemples d'éléments conducteurs actifs 13₂, 13₃, avec des pattes respectives 14₂, 14₃, et un exemple d'élément conducteur de détection 13₁ et des pattes respectives 14₁ₐ, 14_{1b}.

Dans cet exemple, les éléments conducteurs de détection prennent la forme d'une lame souple pliée sur elle-même, terminée à chacune de ses extrémités de brins identiques, formant pattes, identiques à deux des éléments conducteurs actifs.

Bien sûr, d'autres modes de réalisation sont possibles. Par exemple, les éléments conducteurs de détection peuvent avoir des largeurs correspondant à trois éléments actifs, ou bien s'étendre de part et d'autre des prolongements des pattes, etc.

Cet arrangement particulier permet de prévoir des pattes 14₁ₐ, 14_{1b}, et 14₆ₐ, 14_{6b} respectivement, dont l'écartement correspondant à l'écartement entre deux pattes prolongeant des éléments conducteurs actifs. Ainsi, l'ensemble des pattes sont espacés de façon régulière, de la même façon que si l'embase ne contenait que des éléments conducteurs actifs.

Ainsi, il est possible de prévoir des éléments conducteurs de détection sur des embases selon l'état de la technique. Il n'est en effet pas nécessaire de modifier les embases, et les divers éléments conducteurs peuvent être insérés dans l'embase au moyen des pattes et des orifices prévus, puisque les écartements peuvent demeurer les mêmes. Il suffit donc de remplacer un ou plusieurs éléments conducteurs par un ou plusieurs éléments conducteurs de détection.

Lorsqu'un connecteur mâle adapté est inséré dans le connecteur femelle, un élément 35 du corps 31 du connecteur électrique mâle 30 vient au contact avec le ou les éléments conducteurs de détection 13₁, 13₆. Le mouvement de translation va entrainer le fléchissement du ou des éléments conducteurs qui vont se déplacer jusqu'à la position active lorsque le connecteur mâle est en bout de course. Dès le début de ce déplacement, le contact avec le conducteur fixe 15 est rompu, ce qui provoque l'ouverture d'un circuit électrique.

Selon le type de connecteur mâle, l'élément 35 amené au contact avec les éléments de détection peut correspondre à
- une partie inférieure d'une cloison entre les cavités (figure 3b), ou
- une partie inférieure d'une cloison latérale dudit connecteur électrique mâle (figure 3a).

Ces éléments 35 correspondent aux parties hachurées sur les figures 3a et 3b.

Ce mode de réalisation permet à une même embase 10 d'être compatible avec des connecteurs mâles de type RJ1x (figure 3a) ou RJ45 (figure 3b). Dans chacun des deux cas, un élément différent du corps du connecteur entrera en contact avec les éléments conducteurs de détection avec lesquels il est aligné.

D'une façon générale, tout élément 35 du corps 31 du connecteur mâle peut être utilisé pour coopérer avec la largeur adaptée des éléments conducteurs de détection, afin de les amener en position active.

La largeur est ainsi adaptée pour à la fois permettre de conserver les mêmes orifices dans le corps 11 de l'embase 10 et permettre le contact avec des éléments 35 du connecteur mâle lors de son insertion.

La **figure 4** illustre également le déplacement des éléments conducteurs de détection lors de l'insertion du connecteur électrique mâle.

La figure 4 illustre une configuration avant cette insertion. La flèche indique la translation de l'élément 35 du corps du connecteur mâle lors de son insertion dans l'embase 10.

Cette translation va provoquer le contact contre les éléments conducteurs 13₁, 13₆. Du fait de l'inclinaison de ceux-ci et du montage mobile ou flexible, l'extrémité qui est en contact avec le conducteur fixe 15 est déplacé vers le bas, entraînant la rupture du contact électrique, et, conséquemment, l'ouverture d'un circuit électrique.

L'ouverture du circuit électrique peut être aisément détectée, ce qui permet alors de détecter la présence d'un connecteur électrique mâle dans l'embase 10. On peut alors supposer qu'un appareil tiers, 2, est connecté et que l'interface de communication 20 doit être maintenue active ou réveillée. Dans le cas contraire, l'interface de communication peut être mise en veille afin de limiter la consommation d'énergie.

Ainsi, un circuit de détection 21 peut être prévu pour mettre en veille l'interface de communication 20 lorsque le circuit électrique est fermé. Ce circuit de détection 21 peut être un composant intégré à l'interface de communication 20, ou bien un composant extérieur à celle-ci.

Selon un mode de réalisation, l'ensemble de l'appareil (ou passerelle domestique) 1 peut être mis en veille et réveillé.

Selon un mode de réalisation, le circuit fermé comprend deux éléments conducteurs de détection, chacun pouvant être préférentiellement de part et d'autre des éléments conducteurs actifs. Selon un autre mode de réalisation, le circuit comprend un unique élément conducteur de détection et un élément conducteur actif mais non utilisé pour la transmission des signaux.

Dans l'exemple de réalisation de la figure 4, le circuit fermé comprend deux éléments conducteurs 13₁, 13₆ de part et d'autre d'éléments conducteurs actifs non représentés.

Un premier élément conducteur 13₁ est relié à une tension haute VCC. Le second élément conducteur 13₆ est relié à la terre, via une résistance.

Lorsque le circuit est fermé, le circuit de détection 21 voit une tension haute VCC aux bornes de la résistance. Lorsque le circuit est ouvert, il n'y a plus de tension appliquée aux bornes de la résistance et le circuit de détection. Le circuit de détection voit alors une tension à 0V, forcée par la résistance à la terre.

Selon un autre mode de réalisation, le premier élément conducteur 13₁ est relié à la terre via la résistance tandis que le second élément conducteur 136 est relié à la tension haute VCC.

Comme vu sur cet exemple, il est suffisant qu'un seul des éléments conducteurs de détection 13₁, 13₆ soit mis hors de contact avec le conducteur fixe 15 pour que le circuit soit ouvert et que la présence du connecteur mâle soit ainsi détectée.

Le procédé et le connecteur électrique femelle sont prévus pour fonctionner indépendamment de la présence ou non de bornes dans les cavités 32₁, 32₂, 32₃..., situées en face des éléments conducteurs de détection lors de l'insertion. En effet, ces derniers sont actionnés non pas par une borne mais par le corps du connecteur mâle. En conséquence, le procédé et le connecteur femelle sont compatibles avec des connecteurs mâles ayant toutes les bornes, et des connecteurs mâles à bas coût, n'ayant des bornes que pour les éléments conducteurs utiles.

Le mécanisme décrit permet de réutiliser le parc existant de connecteurs mâles, et n'engendre qu'une modification mineure sur les connecteurs femelles. Il permet ainsi une fonctionnalité supplémentaire aux appareils électriques mis sur le marché et qui reste compatible avec des appareils 2 pouvant être connectés.

Autrement dit, la seule modification à effectuer sur l'embase est la création de l'élément conducteur « double ». Cette proposition permet de résoudre les problèmes de détection d'insertion de connecteurs mâles « bas coût » sans avoir à mettre en production un nouveau moule pour l'enveloppe mécanique de l'embase et sans avoir à modifier le circuit imprimé des produits impactés.

La détection de la présence du connecteur mâle est assurée par une simple détection d'une ouverture d'un circuit électrique qui peut se concrétiser par une simple mesure d'une tension électrique. Ce type de circuit de détection peut fonctionner indépendamment de l'état des circuits électroniques de l'appareil électrique 1, et de l'interface de communication 20. Ceux-ci peuvent notamment être en état de veille. L'insertion d'un connecteur mâle peut alors servir à déclencher le réveil de l'interface de communication 20, ou même de l'appareil 1.

Ainsi, l'interface de communication, voire l'ensemble de l'appareil 1, peut être mise en veille lorsqu'un connecteur électrique mâle n'est pas détecté comme présent (ou inséré) et réveillé lorsqu'un connecteur électrique mâle est détecté comme présent (ou inséré).

En outre, un tel circuit de détection n'ajoute pas de mécanismes engendrant un surcoût énergétique. Il est au contraire neutre sur ce plan, en plus d'être économiquement peu coûteux.

Bien entendu, la présente invention n'est pas limitée aux exemples et aux modes de réalisation décrits et représentés, mais est définie par les revendications. Elle est notamment susceptible de nombreuses variantes accessibles à l'homme de l'art.

## Revendications

1. Connecteur électrique femelle (10) pour appareil électrique comportant une interface de communication (20) reliée audit connecteur électrique femelle (10), le connecteur électrique femelle comportant une pluralité d'éléments conducteurs (13₁, 13₂, 13₃...) positionnés en face de cavités (32₁, 32₂, 32₃...) adaptées d'un connecteur électrique mâle, un ensemble desdits éléments conducteurs, dits actifs, étant destinés à établir un contact avec des bornes dudit connecteur électrique mâle (30) en s'insérant dans lesdites cavités (32₁, 32₂, 32₃...), dans lequel au moins un autre élément conducteur (13₁, 13₆)
- est mobile entre une position de repos le mettant en contact avec un conducteur fixe (15) de sorte à fermer un circuit électrique, et une position active rompant ledit contact, et
- possède une largeur adaptée pour être amené en position active par un élément (35) du corps (31) dudit connecteur électrique mâle (30) lorsque ledit connecteur électrique mâle est inséré dans le connecteur électrique femelle (10).

2. Connecteur électrique femelle selon la revendication précédente, dans lequel chaque élément conducteur actif est prolongé par au moins une patte destinée à traverser le corps dudit connecteur électrique femelle (10) pour solidariser ledit élément conducteur audit corps, dans lequel ledit au moins un autre élément conducteur est prolongé par deux pattes dont l'écartement correspondant à l'écartement entre deux pattes prolongeant des éléments conducteurs actifs.

3. Connecteur électrique femelle selon l'une des revendications précédentes, comportant un circuit de détection pour mettre en veille et/ou réveiller ladite interface de communication (20) lorsque ledit circuit électrique est fermé.

4. Connecteur électrique femelle selon l'une des revendications précédentes, dans lequel ledit au moins un autre élément conducteur (13₁, 13₆) est situé immédiatement avant et/ou après lesdits éléments conducteurs actifs

5. Connecteur électrique femelle selon l'une des revendications précédentes, dans lequel ladite interface de communication est une interface téléphonique d'une passerelle résidentielle.

6. Appareil électrique comportant au moins un connecteur électrique femelle selon l'une des revendications précédentes.

7. Procédé de détection de la présence d'un connecteur électrique mâle (30) inséré dans un connecteur électrique femelle (10) d'un appareil électrique, ledit connecteur électrique femelle comportant une pluralité d'éléments conducteurs (13₁, 13₂, 13₃...) positionnés en face de cavités (32₁, 32₂, 32₃...) adaptées d'un connecteur électrique mâle, dans lequel une insertion dudit connecteur mâle (30) entraîne
- une mise en contact d'un ensemble desdits éléments conducteurs, dits actifs avec des bornes (33₁, 33₂, 33₃, 33₄) dudit connecteur électrique mâle (30) en s'insérant dans lesdites cavités (32₁, 32₂, 32₃, 32₄), et,
- un déplacement d'au moins un autre élément conducteur (13₁, 13₆) depuis une position de repos le mettant en contact avec un conducteur fixe (15) de sorte à fermer un circuit électrique, vers une position active rompant ledit contact, par l'action d'un élément (35) du corps dudit connecteur électrique mâle (30), et,
- une détection de la présence dudit connecteur électrique mâle (30) par la détection de l'ouverture dudit circuit électrique.

8. Procédé selon la revendication précédente, comportant en outre une mise en veille d'une interface de communication dudit appareil électrique lorsque ledit connecteur électrique mâle n'est pas détectée comme présent, et/ou un réveil de ladite interface de communication lorsque ledit conducteur électrique mâle est détectée comme présent.

9. Procédé selon l'une des revendications 7 ou 8, dans lequel ledit élément (35) du corps dudit connecteur électrique mâle correspond à une partie inférieure d'une cloison entre lesdites cavités ou une partie inférieure d'une cloison latérale dudit connecteur électrique mâle.

10. Procédé selon l'une des revendications 7 à 9, dans lequel ledit connecteur électrique mâle ne comporte pas de bornes dans les cavités (32₁, 32₆; 32₁, 32₂, 32₇, 32₈) correspondant audit au moins un autre élément conducteur (13₁, 13₆)
